# FASCICULE DE BREVET EUROPEEN

(11) **EP 1 857 600 B1**
(45) Date de publication et mention de la délivrance du brevet: **03.06.2009**
(21) Numéro de dépôt: 07290499.8
(22) Date de dépôt: 23.04.2007
(51) Int. Cl.: E03B 3/03, E03B 1/04

(54) **Dispositif de stockage et de traitement de l'eau de pluie**
Vorrichtung zum Speichern und Aufbereiten von Regenwasser
Device for storing and treating rainwater

(30) Priorité: 28.04.2006 FR 0603831
(43) Date de publication de la demande: 21.11.2007
(73) Titulaire: Le Duff, Gérard, 29860 Bourg Blanc (FR); Le Duff, Jestin Odile, 29860 Bourg Blanc (FR)
(72) Inventeur: Le Duff, Gérard, 29860 Bourg Blanc (FR); Le Duff, Jestin Odile, 29860 Bourg Blanc (FR)
(74) Mandataire: Poupon, Michel

(56) Documents cités:
- DE-A1- 19 522 433
- DE-U1- 20 019 908

## Description

La présente invention concerne un dispositif de stockage et de traitement de l'eau de pluie.

L'eau généralement utilisée dans les habitations provient des réseaux d'eau potable. Or, certaines installations, telles que les toilettes, les machines à laver ou l'arrosage des jardins, ne nécessitent pas une eau potable.

Certains dispositifs permettent de récupérer l'eau de pluie dans des citernes. Ainsi, le brevet WO 2005111324 décrit une citerne destinée à stocker l'eau de pluie, et qui est munie d'un système permettant de drainer l'eau.

D'autres dispositifs permettent, outre le stockage de l'eau de pluie, sa purification en vue d'une réutilisation ultérieure, plus particulièrement dans des installations sanitaires.

Ainsi, le brevet FR 2 729 168 décrit notamment un dispositif destiné à la récupération, au filtrage, au brassage et à la réutilisation de l'eau de pluie. Ce dispositif comprend plusieurs cuves munies de grilles, du sable filtrant de granulométrie variable en fonction du niveau de filtration souhaitée, ainsi qu'un dispositif permettant de maintenir l'eau sous pression afin qu'elle puisse être utilisée dans des installations telles que les chasses d'eau, ou pour l'arrosage des jardins.

Le brevet GB 2 022 437 décrit un dispositif dans lequel l'eau de pluie passe dans une colonne où elle est guidée à l'aide de cônes. Elle est ensuite filtrée dans cette même colonne. Divers agents chimiques peuvent être injectés dans la colonne à des fins de stérilisation et de floculation de l'eau.

Le document DE 195 22 433 décrit un module de purification de l'eau de pluie installé dans une colonne qui permet d'améliorer la qualité de l'eau par un traitement physique et chimique. Le module de purification est constitué d'une pluralité de bacs superposés contenant des média filtrants disposés en cascade.

Le document DE 200 19 908 U décrit un dispositif de récupération, de filtration et de traitement de l'eau de pluie comportant un réseau d'alimentation destiné à drainer l'eau, un filtre, une cuve de stockage, un clapet flottant, un siphon de trop-plein et un dispositif de permutation.

Les divers systèmes permettant de stocker et de réutiliser l'eau de pluie font appel à une filtration. Cependant, aucune purification automatique de l'eau n'a lieu, sauf à ajouter des agents chimiques lors de cette purification.

L'invention se propose de remédier à cet inconvénient en proposant un dispositif destiné à récupérer, à filtrer et à traiter l'eau de pluie, permettant une filtration et une purification automatiques, sans ajout ultérieur de produits traitants, permettant notamment de neutraliser l'acidité de l'eau de pluie, afin qu'elle puisse être utilisée dans des installations sanitaires, telles que les chasses d'eau ou les machines à laver.

A cet effet, la présente invention a pour objet un dispositif de récupération, de filtration et de traitement de l'eau de pluie à partir d'une toiture, caractérisé en ce qu'il est constitué :
- d'un réseau d'alimentation (1) destiné à drainer l'eau provenant des gouttières et à alimenter l'habitation à laquelle ledit dispositif s'applique,
- d'un filtre destiné à éliminer les impuretés grossières, telles que les feuilles, les brindilles, ou toutes autres matières organiques ou solides,
- d'une cuve de stockage reliée au filtre par un système de raccordement, ladite cuve de stockage étant munie d'une colonne dans laquelle est disposé un module de purification de l'eau de pluie, le module de purification étant constitué d'une pluralité de bacs superposés contenant des média filtrants disposés en cascade, lesdits bacs (4f) étant décalés les uns par rapport aux autres,
- d'un clapet flottant de sécurité déclenchant une alarme en cas de niveau de remplissage de la cuve de stockage trop bas,
- d'un siphon de trop-plein,
- d'un dispositif de permutation destiné à modifier l'arrivée d'eau dans les installations sanitaires.

La récupération de l'eau de pluie est réalisée à partir de la toiture, passe dans les gouttières puis arrive dans le dispositif proprement dit.

Ce dispositif se compose d'un système de filtration disposé en amont de la cuve de stockage, destiné à éliminer les impuretés les plus grossières. La cuve de stockage est munie d'un module de purification de l'eau, destiné notamment à neutraliser l'acidité de la pluie. L'ensemble est raccordé à un système d'alimentation prévu dans l'habitation auquel le dispositif se destine.

On comprendra mieux l'invention en référence aux dessins annexés sur lesquels :
- la figure 1 représente une habitation équipée du dispositif de récupération, de filtration et de traitement de l'eau de pluie,

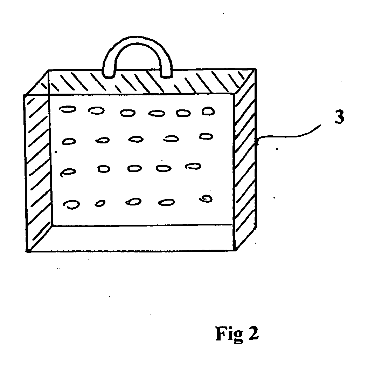

- la figure 2 représente le système de filtration, avec ses deux grilles,

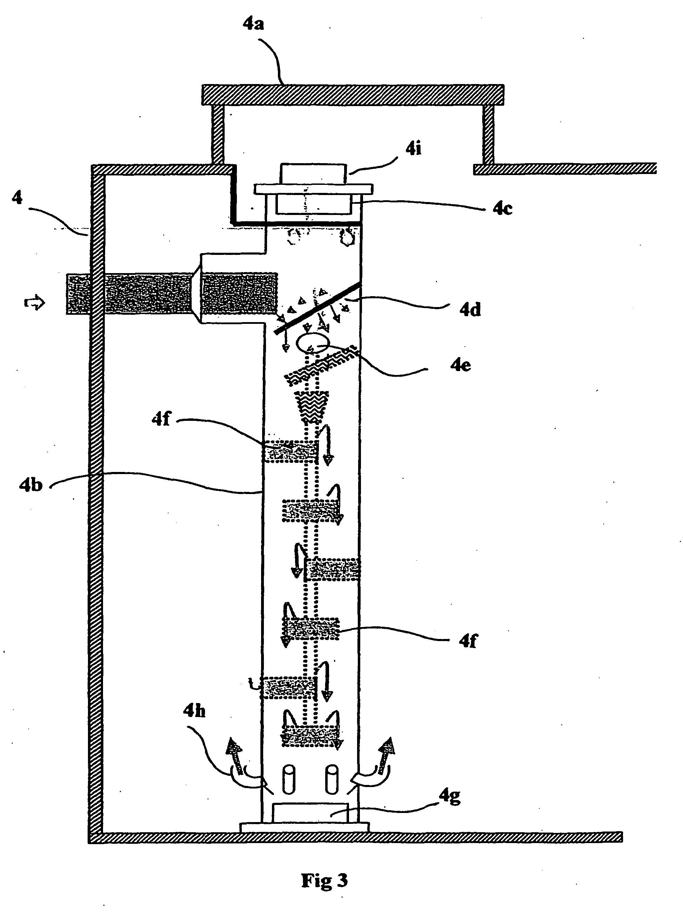

- la figure 3 représente le dispositif de traitement de l'eau tel qu'il est disposé dans la cuve de stockage de l'eau de pluie,
- la figure 4 représente le siphon de trop-plein disposé en aval de la cuve de stockage,
- la figure 5 représente le tableau de permutation, permettant de modifier l'arrivée d'eau dans les installations sanitaires.

Le dispositif selon l'invention permet de récupérer l'eau de pluie à partir de la pente de la toiture. L'eau ruisselle sur cette pente, pour arriver au niveau des gouttières en bas desquelles elle est récupérée par le dispositif selon l'invention.

Ce dispositif comprend un réseau d'alimentation 1 permettant à la fois de drainer l'eau provenant des gouttières vers le dispositif de filtration et de traitement selon l'invention, puis de ramener l'eau filtrée et purifiée vers le lieu de l'habitation à laquelle elle se destine par l'intermédiaire d'un second réseau d'alimentation distinct.

En amont du dispositif de récupération, de purification et de traitement de l'eau de pluie, est disposé un regard 2 destiné à contrôler l'installation selon l'invention, et plus particulièrement le système de filtration et de traitement de l'eau. Ce regard 2 se trouve généralement dans toutes les installations de récupération et de filtration de l'eau, et de ce fait ne fait pas l'objet de la présente invention.

A travers le réseau d'alimentation 1a, l'eau de pluie traverse un filtre 3 dans lequel seront éliminées les impuretés grossières, telles que les feuilles, les brindilles, ou toutes autres matières organiques ou matières solides.

Le filtre 3 aura une capacité de filtration variable en fonction de la surface du toit. En effet, la quantité d'eau récupérée est fonction de la surface de la toiture. De plus, pour une surface de toiture importante, le filtre 3 sera préférentiellement muni d'un dispositif de nettoyage automatique de la grille de filtration, qui se déclenche en cas de forte pluie, de manière à éliminer les impuretés qui ont pu s'accumuler sur le filtre. Lorsque la surface de la toiture est moins importante, le filtre 3 est nettoyé manuellement.

Le filtre 3 est muni de deux grilles formant un tamis dont la taille des mailles variera en fonction de la finesse de la filtration que l'on souhaite obtenir. La grille par laquelle l'eau entre aura des mailles plus grossières que la deuxième grille de manière à parfaire la filtration. Entre ces deux grilles, est disposé un média filtrant, tel qu'un matériau géotextile qui va retenir les particules contenues dans l'eau de pluie. Cette première étape de filtration permet de purifier l'eau de ses particules grossières de manière à ce que, lors de son arrivée dans la cuve de stockage 4, elle puisse être traitée sans autre étape de filtration.

Selon la disposition de l'habitation et du dispositif selon l'invention, le filtre 3 est enterré ou disposé contre un mur.

Après son passage dans le filtre 3, le réseau d'alimentation 1a assure ensuite l'arrivée de l'eau de pluie dans la cuve de stockage 4. La cuve de stockage 4 est enterrée ou aérienne.

La face supérieure de la cuve de stockage 4 est munie d'un trou d'homme 4a, de manière à pouvoir remplacer et entretenir le dispositif de traitement de l'eau disposé dans la cuve de stockage 4.

La cuve de stockage 4 est réalisée de manière habituelle en béton, en plastique, ou en composite.

Dans la cuve de stockage 4, est disposée une colonne 4b surmontée d'un tampon de visite 4c, permettant de changer et d'entretenir le module de traitement de l'eau.

Au niveau de l'arrivée de l'eau de pluie, et sous le tampon de visite 4c, est disposée une grille 4d, permettant à la fois la diffusion de l'eau et son oxygénation, permettant ainsi à l'eau de pluie de ne pas arriver en bloc et d'un seul coup dans la colonne 4b.

Sous la grille 4d, sont disposés un récupérateur et un canalisateur 4e permettant de centraliser et de guider l'eau dans la colonne 4b.

Sous ces différents éléments, plusieurs média filtrants 4f sont superposés dans des bacs. Ces bacs 4f sont décalés les uns par rapport aux autres de manière à permettre à l'eau de pluie de tomber en cascade, et favoriser ainsi sa descente vers le fond de la cuve de stockage 4.

Ces média filtrants 4f sont munis de divers éléments, notamment des bases, permettant notamment de neutraliser l'acidité de l'eau de pluie, en faisant remonter son pH, jusqu'à la neutralité.

Les média filtrants sont destinés également à purifier l'eau par leur action bactéricide. Dans ce cas précis, le bac 4f peut être muni d'un média à base de cuivre et/ou de zinc, à titre d'exemple, ces éléments étant connus notamment pour leur activité bactéricide.

Les média filtrants remplissant les bacs 4f peuvent être constitués d'éléments identiques ou différents selon les besoins de purification de l'eau de pluie.

Les média filtrants présents dans les bacs 4f varient en fonction des besoins du type d'eau, du climat, et de l'environnement dans lequel se trouve le dispositif selon l'invention.

Les bacs 4f contenant les média filtrants ont une forme de coupole de manière à ce que l'eau, par débordement dans un des bacs 4f, passe dans le suivant, avec un mouvement de cascade.

Sous les bacs 4f, au fond de la colonne 4b, est disposé un dernier média 4g, dit média de finition, contenant préférentiellement de la minéralite. Entre le média de finition 4g et le dernier média filtrant 4f, sont disposés plusieurs coudes 4h sur toute la périphérie de la colonne 4b. Ces coudes permettent à l'eau de pluie préalablement filtrée puis traitée de ressortir de la colonne 4b pour être stockée dans la cuve 4, après s'être chargée des éléments contenus dans le média 4g. L'eau remonte vers les coudes par simple pression. La présence des coudes évite à l'eau d'être brassée lors de son arrivée dans la cuve de stockage, et de faire remonter les éventuelles particules restantes disposées au fond de la cuve 4.

La colonne 4b peut être munie d'une pompe à air 4i disposée au-dessus du tampon de visite. Cette pompe à air 4i est destinée à faire des bulles dans l'eau de pluie, de manière à faciliter son passage dans les différents média filtrants 4f. Cette pompe à air trouve particulièrement son utilité en cas d'arrivée d'eau de pluie en volume important, permettant ainsi de ne pas saturer les média filtrants.

La cuve de stockage 4 est munie d'une ouverture en cas d'un remplissage trop important de la cuve de stockage 4. Cette ouverture est équipée d'un siphon 5 munie d'une grille 5a, et d'un clapet 5b.

En cas de trop-plein de la cuve de stockage 4, l'eau de pluie passe au niveau de la grille 5a puis ressort par une ouverture 5c pour aller dans un puits perdu.

La grille 5a évite le passage de nuisibles dans le siphon. Le clapet 5b, ayant une forme de boule, bloque l'accès de l'eau vers la cuve de stockage, mais pas son accès vers le puits perdu, afin d'éviter la contamination de la cuve de stockage 4.

Le système de diffusion permis notamment grâce à la colonne 4b et ses différents composants évite tout brassage superflu de l'eau. Il permet également de diriger les éventuelles particules restantes dans l'eau vers les angles au fond de la cuve de stockage 4.

Le dispositif selon l'invention est muni d'un système de permutation 6 destiné à changer l'alimentation du réseau, soit en eau de ville, c'est-à-dire en eau potable, soit en eau de pluie traitée selon le niveau de réserves de la cuve de stockage 4.

Un second réseau d'alimentation 1b permet le retour de l'eau de pluie traitée vers l'habitation à laquelle elle se destine.

Cette habitation présente un système de permutation 6, constitué de deux systèmes d'alimentation 6a, 6b alimentant respectivement les installations en eau de pluie traitée et en eau de ville.

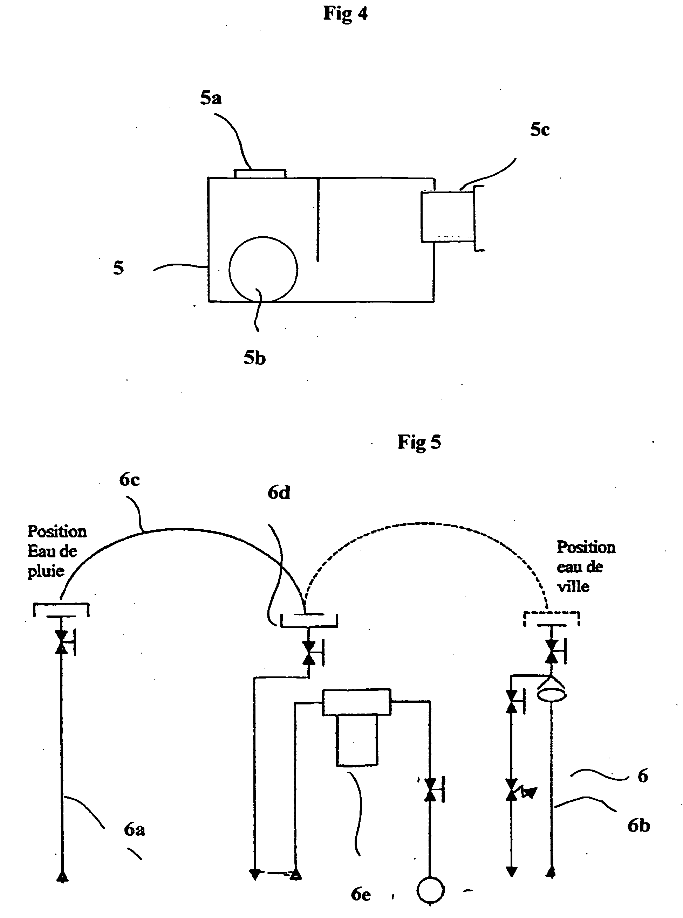

Un manchon 6c est raccordé au système d'alimentation 6d des installations sanitaires auxquelles le dispositif selon l'invention se destine. Sur la figure 5, le manchon 6c permet aux installations sanitaires d'utiliser l'eau de ville, par exemple quand la cuve de stockage 4 n'est pas suffisamment remplie.

La cuve de stockage 4 est munie d'un clapet flottant vers son extrémité inférieure de manière à déclencher une alarme quand le niveau d'eau dans la cuve de stockage est trop bas, afin que l'eau de ville remplace l'eau de pluie dans les installations sanitaires alimentées avec le dispositif selon l'invention. Le clapet sera disposé à une vingtaine de centimètres du fond de la cuve de stockage 4.

Le déclenchement de l'alarme permet à l'utilisateur du dispositif de fermer manuellement la vanne 6e destinée à l'arrivée d'eau de pluie dans les installations sanitaires. Une inversion de la position du manchon 6c permet d'utiliser l'eau de ville en cas de réserves insuffisantes dans la cuve 4, ou l'eau de pluie filtrée et traitée en cas de réserves importantes.

Le tableau de permutation est muni à son arrivée d'un module de filtration 6^{e} permettant d'éliminer les métaux et les pesticides de l'eau de pluie.

Le dispositif de permutation 6 est équipé d'une pompe permettant l'arrivée de l'eau de pluie dans les installations sanitaires, si la vanne du dispositif de permutation 6 est disposée en ce sens.

Le dispositif selon l'invention peut être relié à toutes les installations sanitaires ne nécessitant pas d'eau potable, telles que les toilettes, les machines à laver, l'arrosage extérieur, le nettoyage des voitures à titre d'exemple non limitatif.

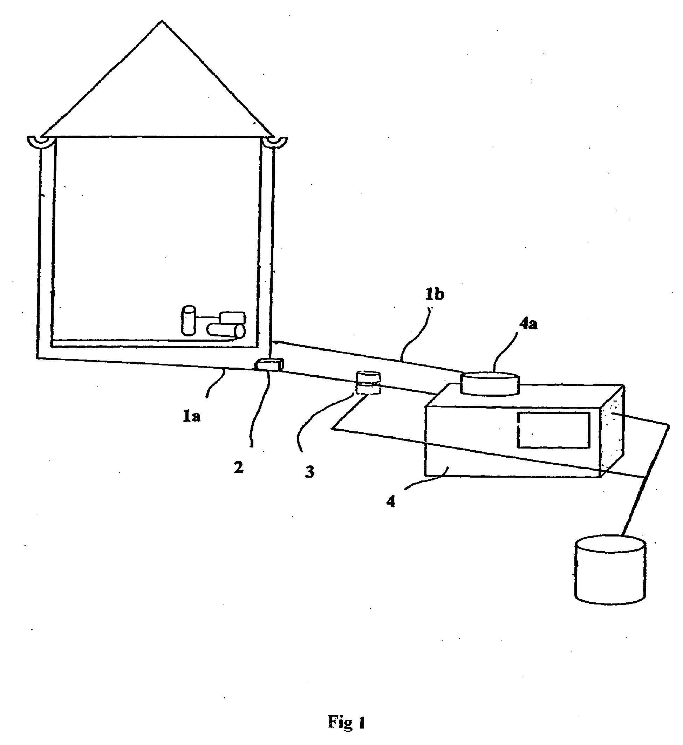

La disposition des différents éléments, comme on peut le voir sur la figure 1, nécessite une certaine inclinaison de manière à ce que l'eau de pluie puisse s'écouler facilement vers la cuve de stockage 1. Ainsi, entre la cuve de stockage 4 et le filtre 3, une inclinaison de 1% au minimum est nécessaire. Une pompe permet de faire revenir l'eau purifiée vers l'habitation à laquelle elle se destine.

Un dispositif de vidange est prévu. Il relie le filtre 3 ainsi que la réserve 4 vers le puits perdu. Il permet ainsi de vidanger les détritus collectés dans le filtre 3, et le trop-plein d'eau de pluie dans la cuve de stockage 4.

Bien que l'invention ait été décrite avec des moyens de réalisation particuliers, elle comprend tous les équivalents techniques des moyens décrits.

## Revendications

1. Dispositif de récupération, de filtration et de traitement de l'eau de pluie à partir d'une toiture, destinée aux installations sanitaires telles que les toilettes, les machines à laver, ou à l'arrosage des jardins, constitué :
- d'un réseau d'alimentation (1) destiné à drainer l'eau provenant des gouttières et à alimenter l'habitation à laquelle ledit dispositif s'applique,
- d'un filtre (3) destiné à éliminer les impuretés grossières, telles que les feuilles, les brindilles, ou toutes autres matières organiques ou solides,
- d'une cuve de stockage (4) reliée au filtre (3) par un système de raccordement (1), ladite cuve de stockage étant munie d'une colonne (4b) dans laquelle est disposé un module de purification (4) de l'eau de pluie,
- d'un clapet flottant de sécurité déclenchant une alarme en cas de niveau de remplissage de la cuve de stockage (4) trop bas,
- d'un siphon de trop-plein (5),
- d'un dispositif de permutation destiné à modifier l'arrivée d'eau dans les installations sanitaires, **caractérisé en ce que**
le module de purification est constitué d'une pluralité de bacs (4f) superposés contenant des média filtrants disposés en cascade, lesdits bacs (4f) étant décalés les uns par rapport aux autres.

2. Dispositif de récupération, de filtration et de traitement de l'eau de pluie selon la revendication 1, **caractérisé en ce que** le filtre (3) contient deux grilles, la première ayant des mailles plus espacées que la seconde, entre lesquelles.est disposé un média filtrant ou un matériau géotextile.

3. Dispositif de récupération, de filtration et de traitement de l'eau de pluie selon la revendication 1, **caractérisé en ce que** la cuve (4) contient
- un tampon de visite (4c) surmontant la colonne (4b),
- une grille (4d) disposée au niveau de l'arrivée de l'eau de pluie et destinée à la diffusion et à l'oxygénation de l'eau,
- un récupérateur et un canalisateur (4e) disposés sous ladite grille (4d).

4. Dispositif de récupération, de filtration et de traitement de l'eau de pluie selon la revendication 1 **caractérisé en ce que** les média filtrants sont composés d'éléments destinés à neutraliser l'eau de pluie et/ou ayant une activité bactéricide.

5. Dispositif de récupération, de filtration et de traitement de l'eau de pluie selon l'une des revendications 1, où 4, **caractérisé en ce que** les média filtrants sont constitués de cuivre et/ou de zinc.

6. Dispositif de récupération, de filtration et de traitement de l'eau de pluie selon l'une des revendications précédentes, **caractérisé en ce que** la partie inférieure de la colonne (4b) contient un média de finition (4g) à base de minéralite.

7. Dispositif de récupération, de filtration et de traitement de l'eau de pluie selon l'une des revendications précédentes, **caractérisé en ce que** la partie inférieure de la colonne (4b) présente une pluralité de coudes (4h), permettant la sortie de l'eau de pluie de la colonne (4b) vers la cuve de stockage (4).

8. Dispositif de récupération, de filtration et de traitement de l'eau de pluie selon la revendication 3, **caractérisé en ce que** la colonne (4b) contient une pompe à air (4i), disposée au-dessus du tampon de visite (4c).

9. Dispositif de récupération, de filtration et de traitement de l'eau de pluie selon l'une des revendications précédentes, **caractérisé en ce que** ladite cuve de stockage (4) est munie d'une ouverture équipée du siphon (5), muni d'une grille (5a) et d'un clapet (5b) destiné à bloquer l'accès de l'eau vers la cuve de stockage (4).

10. Dispositif de récupération, de filtration et de traitement de l'eau de pluie selon l'une des revendications 1 ou 3, **caractérisé en ce que** la cuve de stockage (4) est en béton, en plastique ou en composite.

11. Dispositif de récupération, de filtration et de traitement de l'eau de pluie selon la revendication 1, **caractérisé en ce qu'**un tableau de permutation est muni d'une vanne (6e), permettant d'inverser la position d'un manchon (6c).

12. Dispositif de récupération, de filtration et de traitement de l'eau de pluie selon la revendication 11, **caractérisé en ce que** le tableau de permutation est équipé d'un module de filtration destiné à éliminer les métaux et les pesticides.

## Claims

1. Device for recovering, filtering and treating rainwater from a roof, intended for sanitary installations such as toilets, washing machines, or watering of gardens, comprising:
- a supply network (1) intended to drain water from gutters and to supply the dwelling to which said device is applied,
- a filter (3) intended to remove coarse impurities, such as leaves, twigs or any other organic or solid matter,
- a storage tank (4) connected to the filter (3) by a connecting system (1), said storage tank being provided with a column (4b) in which a rainwater purification module (4f) is arranged,
- a floating safety valve triggering an alarm when the fill level of the storage tank (4) is too low,
- an overflow siphon (5),
- a permutation device designed to modify the arrival of water in sanitary installations, **characterised in that**
the purification module is made up of a plurality of superimposed trays (4f) containing filtration media arranged in a cascade, said trays (4f) being offset with regard to one another.

2. Device for recovering, filtering and treating rainwater according to Claim 1, **characterised in that** the filter (3) contains two grilles, the first having mesh with more widely spaced gaps than the second, between which a filtration medium or a geotextile material is arranged.

3. Device for recovering, filtering and treating rainwater according to Claim 1, **characterised in that** the tank (4) contains
- an inspection cover (4c) at the top of the column (4b),
- a grille (4d) arranged at the level of the arrival of the rainwater and intended to diffuse and oxygenate the water,
- a recuperator and a channelling device (4e) arranged below said grille (4d).

4. Device for recovering, filtering and treating rainwater according to Claim 1 **characterised in that** the filtration media are composed of elements intended to neutralise rainwater and/or water having bactericidal activity.

5. Device for recovering, filtering and treating rainwater according to any one of Claims 1, or 4, **characterised in that** the filtration media are made of copper and/or zinc.

6. Device for recovering, filtering and treating rainwater according to any one of the preceding claims, **characterised in that** the lower part of the column (4b) contains a mineralite-based finishing medium (4g).

7. Device for recovering, filtering and treating rainwater according to any one of the preceding claims, **characterised in that** the lower part of the column (4b) has a plurality of bends (4h), allowing the rainwater to exit the column (4b) towards the storage tank (4).

8. Device for recovering, filtering and treating rainwater according to Claim 3, **characterised in that** the column (4b) contains an air pump (4i), arranged above the inspection cover (4c).

9. Device for recovering, filtering and treating rainwater according to any one of the preceding claims, **characterised in that** said storage tank (4) is provided with a fitted opening of the siphon (5), provided with a grille (5a) and a valve (5b) intended to block access of the water towards the storage tank (4).

10. Device for recovering, filtering and treating rainwater according to any one of Claims 1 or 3, **characterised in that** the storage tank (4) is made of concrete, plastic or composite.

11. Device for recovering, filtering and treating rainwater according to Claim 1, **characterised in that** a permutation table is provided with a gate valve (6e), enabling the position of a sleeve (6c) to be inverted.

12. Device for recovering, filtering and treating rainwater according to Claim 11, **characterised in that** the permutation table is equipped with a filtration module intended to remove metals and pesticides.

## Patentansprüche

1. Vorrichtung zum Sammeln, Filtern und Aufbereiten von Regenwasser von einem Dach, die für sanitäre Anlagen, wie zum Beispiel Toiletten, Waschmaschinen oder zum Gartengießen bestimmt ist, bestehend aus:
- einem Versorgungsnetz (1), das dazu bestimmt ist, das Wasser, das von den Dachrinnen kommt, abzuleiten und das Wohnhaus, auf das die Vorrichtung angewandt wird, zu versorgen,
- einem Filter (3), das dazu bestimmt ist, grobe Verunreinigungen, wie zum Beispiel Blätter, Halme oder alle anderen organischen oder Feststoffe zu beseitigen,
- einem Speicherbehälter (4), der mit dem Filter (3) durch ein Anschlusssystem (1) verbunden ist, wobei der Speicherbehälter mit einer Säule (4b) versehen ist, in der ein Reinigungsmodul (4) des Regenwassers angeordnet ist,
- einer Schwimmer-Sicherheitsklappe, die bei einem zu niedrigen Füllstand des Speicherbehälters (4) einen Alarm auslöst,
- einem Überlaufsiphon (5),
- einer Wechselvorrichtung, die dazu bestimmt ist, die Wasserzufuhr in die sanitären Anlagen zu wechseln, **dadurch gekennzeichnet, dass**
das Reinigungsmodul aus mehreren übereinander liegenden Behältern (4f) besteht, die Filtermedien enthalten, die in Kaskade angeordnet sind, wobei die Behälter (4f) zueinander versetzt sind.

2. Vorrichtung zum Sammeln, Filtern und Aufbereiten von Regenwasser nach Anspruch 1, **dadurch gekennzeichnet, dass** das Filter (3) zwei Gitter enthält, wobei das erste weiter beabstandete Maschen hat als das zweite, zwischen welchen ein Filtermittel oder ein Geotextil angeordnet ist.

3. Vorrichtung zum Sammeln, Filtern und Aufbereiten von Regenwasser nach Anspruch 1, **dadurch gekennzeichnet, dass** der Behälter (4) Folgendes enthält:
- einen Besichtigungspuffer (4c) oberhalb der Säule (4b),
- ein Gitter (4d), das auf dem Niveau der Zuführung des Regenwassers angeordnet und dazu bestimmt ist, das Wasser zu verteilen und zu oxygenieren,
- einen Rückgewinner und einen Kanalisator (4e), die unter dem Gitter (4d) angeordnet sind.

4. Vorrichtung zum Sammeln, Filtern und Aufbereiten von Regenwasser nach Anspruch 1, **dadurch gekennzeichnet, dass** die Filtermedien aus Elementen bestehen, die dazu bestimmt sind, das Regenwasser zu neutralisieren und/oder die eine bakterizide Aktivität haben.

5. Vorrichtung zum Sammeln, Filtern und Aufbereiten von Regenwasser nach einem der Ansprüche 1 oder 4, **dadurch gekennzeichnet, dass** die Filtermedien aus Kupfer und/oder aus Zink bestehen.

6. Vorrichtung zum Sammeln, Filtern und Aufbereiten von Regenwasser nach einem der vorhergehenden Ansprüche, **dadurch gekennzeichnet, dass** der untere Teil der Säule (4b) ein Endfertigungsmedium (4g) auf Mineralstoffbasis enthält.

7. Vorrichtung zum Sammeln, Filtern und Aufbereiten von Regenwasser nach einem der vorhergehenden Ansprüche, **dadurch gekennzeichnet, dass** der untere Teil der Säule (4b) mehrere Winkelrohre (4h) aufweist, die das Austreten des Regenwassers aus der Säule (4b) zu dem Speicherbehälter (4) erlauben.

8. Vorrichtung zum Sammeln, Filtern und Aufbereiten von Regenwasser nach Anspruch 3, **dadurch gekennzeichnet, dass** die Säule (4b) eine Luftpumpe (4i) aufweist, die oberhalb des Besichtigungspuffers (4c) angeordnet ist.

9. Vorrichtung zum Sammeln, Filtern und Aufbereiten von Regenwasser nach einem der vorhergehenden Ansprüche, **dadurch gekennzeichnet, dass** der Speicherbehälter (4) mit einer Öffnung versehen ist, die mit einem Siphon (5) ausgestattet ist, der mit einem Gitter (5a) und einer Klappe (5b) versehen ist, die dazu bestimmt ist, den Zugang des Wassers zu dem Speicherbehälter (4) zu blockieren.

10. Vorrichtung zum Sammeln, Filtern und Aufbereiten von Regenwasser nach einem der Ansprüche 1 oder 3, **dadurch gekennzeichnet, dass** der Speicherbehälter (4) aus Beton, aus Kunststoff oder einem Verbundwerkstoff besteht.

11. Vorrichtung zum Sammeln, Filtern und Aufbereiten von Regenwasser nach Anspruch 1, **dadurch gekennzeichnet, dass** eine Umschalttafel mit einem Schieber (6a) versehen ist, der das Umkehren der Position eines Stutzens (6c) erlaubt.

12. Vorrichtung zum Sammeln, Filtern und Aufbereiten von Regenwasser nach Anspruch 11, **dadurch gekennzeichnet, dass** die Umschalttafel mit einem Filtermodul ausgestattet ist, das dazu vorgesehen ist, Metalle und Pestizide zu beseitigen.
